# EUROPÄISCHE PATENTANMELDUNG

(11) **EP 0 849 462 A1**
(43) Veröffentlichungstag der Anmeldung: **24.06.1998**
(21) Anmeldenummer: 97120697.4
(22) Anmeldetag: 26.11.1997
(51) Int. Cl.: F02F 1/42, B23Q 3/18, F02F 1/24

(54) **Zylinderkopf für Brennkraftmaschine**

(30) Priorität: 20.12.1996 DE 19653462
(71) Anmelder: Daimler-Benz Aktiengesellschaft, 70546 Stuttgart (DE)
(72) Erfinder: Fischer, Erwin, 70619 Stuttgart (DE); Schädel, Hartmut, 71717 Beilstein (DE); Sigle, Bernd, 71384 Weinstadt (DE); Christoph, Spengel, 72663 Grossbettlingen (DE)

(57) **Zusammenfassung**

Die Erfindung betrifft einen Zylinderkopf (2) für Brennkraftmaschinen sowie ein Verfahren zur Erstaufnahme eines Zylinderkopfrohlings. Zur Erzielung optimaler Verbrennungsbedingungen in den Zylindern einer Brennkraftmaschine ist die exakte Lage der Einlaß- und Auslaßkanäle (10,17) im Zylinderkopf (2) anzustreben. Um eine zuverlässige Herstellung des Zylinderkopfes (2) in kurzer Zeit zu ermöglichen, wird ein Zylinderkopf (2) und ein Verfahren zur Erstaufnahme des Zylinderkopfes vorgeschlagen. Dabei sind im Endbereich von Einlaß- und Auslaßkanälen (10,17) benachbart der jeweiligen Flansche (3,4) Aufnahmeflächen ausgebildet, an denen bei der Erstaufnahme Aufnahmeinstrumente zur Ausrichtung des Zylinderkopfes (2) zur Anlage gebracht werden. Zusätzlich wird eine Vorrichtung zur Urformgebung eines Zylinderkopfes (2) vorgeschlagen.

## Beschreibung

Die Erfindung betrifft einen Zylinderkopf für Brennkraftmaschinen, ein verfahren zur Erstaufnahme eines Gußrohlings eines Zylinderkopfes sowie eine Vorrichtung zur Urformgebung eines Zylinderkopfes nach dem Oberbegriff der Ansprüche 1, 7 und 13.

Zylinderköpfe dienen zum Verschließen der Arbeitszylinder von Brennkraftmaschinen und sind von pro Zylinder jeweils mindestens einem Einlaßkanal und einem Auslaßkanal zum Einlaß bzw. zum Auslaß eines Fluides in einen im Zylinder begrenzten Brennraum durchsetzt. Üblicherweise münden die Kanäle entsprechend der Anordnung der Zylinder reihenartig in einer auf die Zylinder auflegbaren Brennraumseite, wobei die Einlaßkanäle von einem Einlaßflansch und die Auslaßkanäle von einem dem Einlaßflansch gegenüberliegend ausgebildeten Auslaßflansch ausgehen. Die Gemischbildungsbedingungen und Strömungsverhältnisse in den Brennräumen einzelner Zylinder werden in hohem Maße von der Richtung und der Lage der Einlaßkanäle im Zylinderkopf relativ zum Brennraum beeinflußt. Insbesondere bei Diesel-Brennkraftmaschinen ist für eine optimale Verbrennung die exakte Lage der Einlaßkanäle im Zylinderkopf in identischer Ausführung für sämtliche Zylinder Voraussetzung. Bei der Herstellung von Zylinderköpfen ist daher darauf zu achten, daß die präzise Lage der Einlaßkanäle gewährleistet ist. Die Lage der Einlaßkanäle wird bei der Urformgebung des Zylinderkopfes durch die Position von Gießkernen für die einzelnen Kanäle in einem Gießwerkzeug bestimmt. Das Einlegen von einzelnen Gießkernen in das Gießwerkzeug kann jedoch durch Einlegefehler oder Verrutschen der Kerne beim Transport oder beim Gießvorgang zu ungenauen Fehlabgüssen führen. Darüber hinaus ist das komplizierte Einlegen von Einzelkernen nicht automatisch durchführbar, so daß lange Fertigungszeiten des Zylinderkopfes entstehen und insbesondere bei einer Massenfertigung hohe Produktionskosten verursacht werden.

Die JP-63-203246 schlägt daher eine Vorrichtung zum Gießen eines Zylinderkopfes vor, bei der die Gießkerne der Einlaßkanäle und der Auslaßkanäle jeweils zu einem gemeinsamen Rahmenkern zusammengefaßt und jeweils einheitlich in das Gießwerkzeug einlegbar sind. Hierdurch werden bei jedem Abguß eines Zylinderkopfes gleiche Lageverhältnisse der Einlaßkanäle untereinander geschaffen, jedoch sind die Lageverhältnisse solcher Kanäle, welche durch unterschiedlichen Kernpaketen zugeordnete Gießkerne erzeugt werden, schwer beherrschbar. Insbesondere hat sich in der Praxis die weitere Bearbeitung eines Rohlings eines Zylinderkopfes als schwierig erwiesen, da bei der Erstaufnahme zur weiteren Bearbeitung der Rohling wegen der Bedeutung der Einlaßkanallage zur Brennraumseite des Zylinderkopfes an den Einlaßkanälen ausgerichtet werden muß, jedoch auch zusätzlich aus Stabilitätsgründen an den Auslaßkanälen, was wegen der unvermeidlichen Gießtoleranzen einzelner Rohlinge ein zeitaufwendiger und damit teurer Vorgang ist.

Es ist Aufgabe der Erfindung, einen Zylinderkopf für Brennkraftmaschinen derart zu gestalten, daß bei exakter Lage der Kanäle im Zylinderkopf die Erstaufnahme nach der Urformgebung erleichtert und beschleunigt ist, sowie ein Verfahren zur Erstaufnahme eines Zylinderkopfes zu schaffen, welches insbesondere bei einer Massenfertigung in kurzer Aufnahmezeit eine Erhöhung der Ausrichtungspräzision ermöglicht. Es ist außerdem Aufgabe der Erfindung, eine Vorrichtung zur Urformgebung eines Zylinderkopfes zu schaffen, welche beim Gießen der Zylinderköpfe jeweils gleiche Lagen der einzelnen Kanäle in jedem Rohling sicherstellt.

Diese Aufgabe wird bei einem Zylinderkopf für Brennkraftmaschinen, bei einem Verfahren zur Erstaufnahme eines Zylinderkopfes sowie bei einer Vorrichtung zur Urformgebung eines Zylinderkopfes mit den kennzeichnenden Merkmalen der Ansprüche 1, 7 und 13 gelöst.

Um eine Möglichkeit zur exakten Ausrichtung des Zylinderkopfes bei der Erstaufnahme zu schaffen, sind am Zylinderkopf leicht zugängliche Aufnahmeflächen ausgebildet, an denen zusammenwirkende Aufnahmeinstrumente einer Aufnahmevorrichtung zur Anlage bringbar sind. Die Ausrichtung des Zylinderkopfes in drei Raumrichtungen ist gewährleistet, indem in den Endabschnitten mindestens zweier Einlaßkanäle unterschiedlicher Zylinder benachbart des Einlaßflansches gegenüberliegende, ebene Vertikalaufnahmeflächen parallel zur Brennraumseite ausgebildet sind. Zur genauen vertikalen Ausrichtung des Zylinderkopfes senkrecht zur Brennraumseite unter Berücksichtigung der Neigung ist im Endabschnitt mindestens eines Auslaßkanals benachbart des Auslaßflansches mindestens eine Vertikalaufnahmefläche parallel zur Brennraumseite ausgebildet. Eine zweite Aufnahmerichtung längs des Zylinderkopfes, nämlich in Anordnungsrichtung der Zylinderreihe ist erfaßbar, indem im Endabschnitt benachbart des Auslaßflansches mindestens eines Auslaßkanals leicht zugänglich für ein Aufnahmeinstrument mindestens eine Vertikalaufnahmefläche parallel zur Brennraumseite ausgebildet ist. Die Ausrichtungsmöglichkeit in Querrichtung des Zylinderkopfes ist durch mindestens zwei in Längsrichtung des Zylinderkopfes beabstandet ausgebildete Queraufnahmeflächen gegeben.

Der Rohling eines Zylinderkopfes ist sehr exakt und rasch bei der Erstaufnahme in einem Bearbeitungswerkzeug ausrichtbar, indem eine Aufnahmevorrichtung den Zylinderkopf in einer Spannvorrichtung der Bearbeitungsmaschine mit zusammenwirkenden Aufnahmeinstrumenten positioniert. Dabei werden die Aufnahmeinstrumente jeweils in einen Einlaßkanal und/oder einen Auslaßkanal vom jeweiligen Flansch her eingeführt und durch Zustellbewegungen an den jeweils im Endabschnitt der Kanäle ausgebildeten Aufnahmeflächen angelegt. Die Zustellbewegungen der Aufnahmeinstrumente drängen den Zylinderkopf in eine bestimmte Bearbeitungsposition, in der die Spannvorrichtung den Zylinderkopf fixiert. In dieser Bearbeitungsposition bringt die Bearbeitungsmaschine Bezugsbohrungen, Bezugsflächen und dgl. zur Orientierung weiterer Bearbeitungsvorgänge des Zylinderkopfes an. Diese Bezugsmarkierungen sind exakt an der Lage der Einlaßkanäle orientiert, so daß im späteren Betrieb der Brennkraftmaschine optimale Füllungs- und Strömungsverhältnisse in den Zylindern vorliegen.

Die Lage der einzelnen Kanäle im Zylinderkopf ist bei jedem Rohling identisch herstellbar, indem bei der Urformgebung sämtliche Gießkerne zur Erzeugung von Kanälen im Zylinderkopf an einem gemeinsamen Rahmenkern befestigt sind. Die Vorrichtung bestehend aus Rahmenkern und Gießkernen ist als Einheit in ein Gießwerkzeug einlegbar und ermöglicht das Abgießen identischer Rohlinge. Durch entsprechende Formgebung der betroffenen Gießkerne der jeweiligen Kanäle im Zylinderkopf sind in den Endabschnitten der Kanäle Aufnahmeflächen ausbildbar, welche das erfindungsgemäße Verfahren zur Erstaufnahme des Zylinderkopfes ermöglichen.

Ein Ausführungsbeispiel der Erfindung ist nachstehend anhand der Zeichnung näher erläutert. Es zeigen:
- Fig. 1: eine Ansicht eines Einlaßflansches eines Zylinderkopfes für eine Diesel-Brennkraftmaschine,
- Fig. 2: eine Ansicht eines Auslaßflansches eines Zylinderkopfes,
- Fig. 3: einen Querschnitt in einer Ventilebene eines Einlaßkanals in einem Zylinderkopf,
- Fig. 4: eine Vorrichtung zur Urformgebung eines Zylinderkopfes mit einem Rahmenkern und Gießkernen zur Erzeugung von Kanälen.

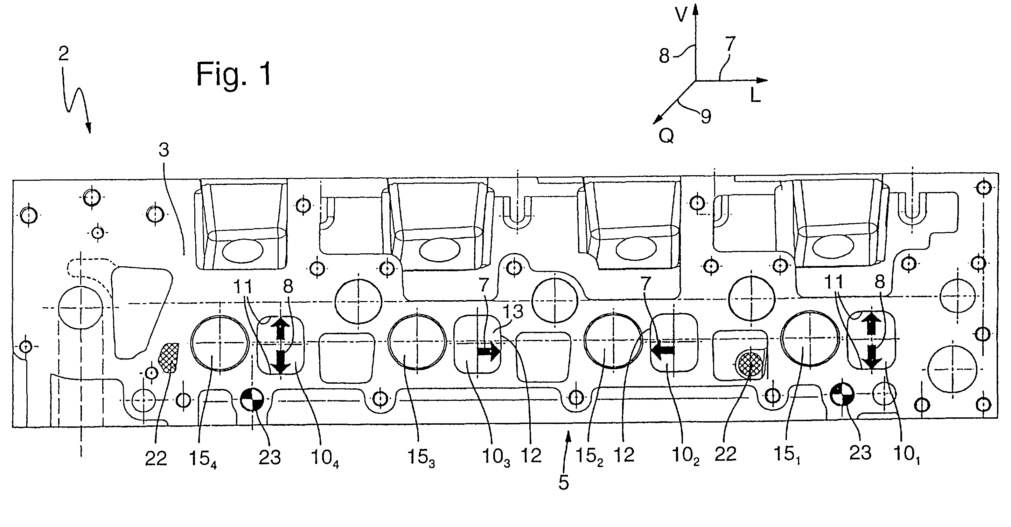

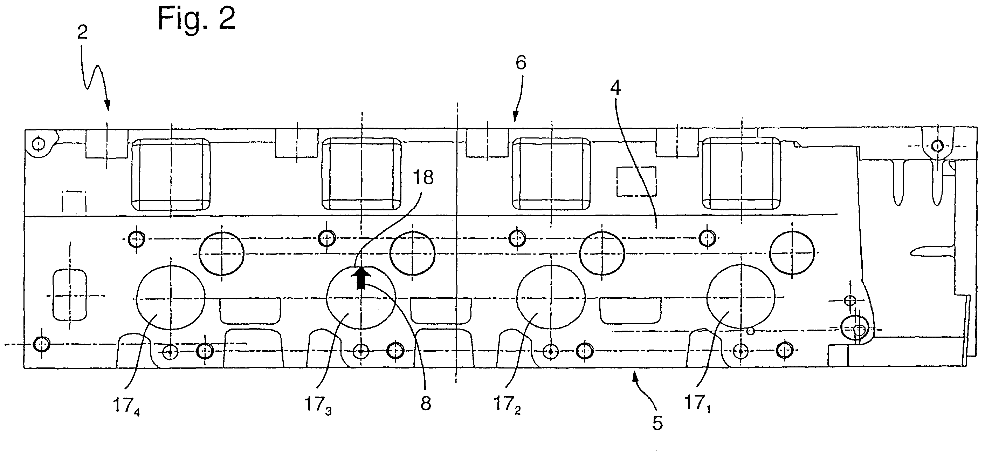

Die Fig. 1 und 2 zeigen einen Zylinderkopf 2 für eine Diesel-Brennkraftmaschine mit vier Zylindern und ist mit einer Brennraumseite 5 auf die Zylinder auflegbar. In der Brennraumseite 5 münden pro Zylinder jeweils zwei Einlaßkanäle 10₁₋₄, 15₁₋₄ und zwei Auslaßkanäle. Durch die Vier-Ventiltechnik wird in bekannter Weise der Liefergrad der Zylinder erhöht. Die Kanäle durchsetzen den Zylinderkopf 2, wobei die Einlaßkanäle 10, 15 in einem Einlaßflansch 3 enden, welcher in Fig. 1 dargestellt ist. Die beiden Auslaßkanäle jedes Zylinders werden innerhalb des Zylinderkopfes 2 zu einem gemeinsamen Auslaßkanal zur Abführung der Verbrennungsabgase aus den Zylindern zusammengefaßt und enden in einem in Fig. 2 dargestellten Auslaßflansch 4, welcher am Zylinderkopf 2 dem Einlaßflansch 3 gegenüberliegend ausgebildet ist.

Zur Erzielung optimaler Verbrennungsergebnisse ist ein identischer Verlauf der Kanäle im Zylinderkopf 2 anzustreben, insbesondere der Einlaßkanäle bei der Einmündung an der Brennraumseite 5. Die Geometrie der Einlaßkanäle legt die Lage der maßgeblich die Gemischbildung in den Zylindern beeinflussenden Bauteile wie Ventile, Sitzringe und andere Steuerteile fest. Daher ist bei der Herstellung des Zylinderkopfes 2 die Bearbeitung des Gußrohlinges im Anschluß an die Urformgebung an den Zylindern zugeordneten Kanälen, insbesondere den Einlaßkanälen 10, 15, zu orientieren. Bei der Erstaufnahme des Zylinderkopfes 2 wird der Gußrohling an den Einlaßkanälen 10 ausgerichtet, so daß nach Anbringen von Bezugsbohrungen 23 die optimale Lage der Einlaßkanäle 10, 15 zum Brennraum sichergestellt ist, nachdem die Bearbeitung des Zylinderkopfes 2, deren Arbeitsschritte auf die Bezugsbohrungen 23 bezogen sind, beendet ist.

Zur Ausrichtung des Zylinderkopfes 2 bei der Erstaufnahme sind im Endabschnitt benachbart des Einlaßflansches 3 jeweils eines Einlaßkanals 10 pro Zylinder Aufnahmeflächen 11, 12 ausgebildet, an denen jeweils zusammenwirkende Ausrichtungsinstrumente zur Anlage bringbar sind. Dabei sind in jedem dieser Einlaßkanäle 10₁₋₄ jeweils zwei gegenüberliegende Vertikalaufnahmeflächen 11 parallel zur Brennraumseite 5 und zwei gegenüberliegende Längsaufnahmefläshen 12 senkrecht zur Brennraumseite 5 ausgebildet. Die Vertikalaufnahmeflächen 11 und die Längsaufnahmeflächen 12 begrenzen den jeweiligen Einlaßkanal 10₁₋₄ und reichen bis an den Einlaßflansch 3 heran, so daß die Öffnungen 13 der Einlaßkanäle 10₁₋₄ im Einlaßflansch 3 einen im wesentlichen rechteckigen Querschnitt aufweisen.

Eine weitere Vertikalaufnahmefläche 18 ist im Endabschnitt eines Auslaßkanals 17 benachbart des Auslaßflansches 4 ausgebildet, wie aus Fig. 2 ersichtlich wird. Der mit der Vertikalaufnahmefläche 18 versehene Auslaßkanal 17₃ ist dem Zylinder der Brennkraftmaschine zugeordnet, welcher in der Zylinderreihenanordnung mittig liegt. Sowohl bei Zylinderköpfen 2 für vier-zylindrische Brennkraftmaschinen als auch für fünf- und sechs-zylindrische Brennkraftmaschinen wird der jeweilige Auslaßkanal 17 zur Ausrichtung des Zylinderkopfes 2 gewählt und mit einer Vertikalaufnahmefläche 18 versehen, welcher in der Reihe der Auslaßkanäle 17₁₋₄ an dritter Stelle mittig liegt. Der Zylinderkopf 2 ist somit in Längsrichtung 7 gemäß der Reihenanordnung der Kanäle im Zylinderkopf 2 und in Vertikalrichtung 8 senkrecht zur Brennraumseite 5 ausrichtbar. Die Ausrichtung des Zylinderkopfes 2 in Querrichtung 9 senkrecht zum Einlaßflansch 3 bzw. zum Auslaßflansch 4 ist durch Queraufnahmeflächen 22 ermöglicht, welche am Einlaßflansch in Längsrichtung 7 des Zylinderkopfes 2 beabstandet ausgebildet sind.

Bei der Erstaufnahme eines Gußrohlings des Zylinderkopfes 2 von einer Aufnahmevorrichtung in einer Spannvorrichtung einer Bearbeitungsmaschine positioniert, wobei in einem ersten Verfahrensschritt zur Ausrichtung in vertikaler Richtung 8 in zwei Einlaßkanäle 10₁, 10₄ vom Einlaßflansch 3 her Aufnahmeinstrumente eingeführt werden. Diese Einlaßkanäle 10₁, 10₄ sind im Zylinderkopf 2 jeweils außenliegend angeordnet, wodurch bei der Ausrichtung für eine genügende Kippstabilität des Zylinderkopfes 2 gesorgt ist. Die Vertikalaufnahmeinstrumente werden in den Einlaßkanälen 10₁, 10₄ jeweils in vertikaler Richtung 8 auseinanderbewegt und an den gegenüberliegend ausgebildeten Vertikalaufnahmeflächen 11 angelegt.

Nach der Festlegung des Einlaßflansches 3 in vertikaler Richtung 8 wird ein Ausrichtungsinstrument vom Auslaßflansch 4 in den Auslaßkanal 17₃ eingeführt und in eine vorbekannte vertikale Position bewegt. Die Vertikalaufnahmefläche 18 ist im Auslaßkanal 17₃ gegenüberliegend der Brennraumseite 5 ausgebildet und wird durch Drücken des Zylinderkopfes 2 von einer Haubenseite 6 gegenüberliegend der Brennraumseite 5 an dem Aufnahmeinstrument zur Anlage gebracht. Liegen sämtliche Vertikalaufnahmeflächen 11, 18 an den ihnen zugeordneten Aufnahmeinstrumenten an und befinden sich diese in der zur Ausrichtung vorgesehenen Position, so ist eine Ausrichtung in vertikaler Richtung 8 durchgeführt.

In einem zweiten Verfahrensschritt wird der Zylinderkopf 2 in Längsrichtung 7 ausgerichtet. Dabei werden in zwei Einlaßkanäle 10₂, 10₃ vom Einlaßflansch 3 her Aufnahmeinstrumente eingeführt und an den Längsaufnahmeflächen 12 zur Anlage gebracht, welche einander zugewandt liegen. Dabei werden die Aufnahmeinstrumente gegeneinandergerichtet zugestellt und legen den Zylinderkopf 2 in Längsrichtung 7 in einer Zangenbewegung fest. Die Längsaufnahmeinstrumente werden in eine zur Ausrichtung des Zylinderkopfes 2 vorbekannte Position bewegt, wodurch der Zylinderkopfrohling bei der Erstaufnahme in der zweiten Raumrichtung, nämlich in Längsrichtung 7 festgelegt wird.

Alternativ zur Anlage der Längsaufnahmeinstrumente durch aufeinandergerichtete Zustellbewegungen an benachbarten Längsaufnahmeflächen in den Einlaßkanälen 10₂, 10₃ können die Aufnahmeinstrumente nach dem Einführen in die Einlaßkanäle durch ausscherende Zustellbewegungen an den relativ zueinander abgewandt liegenden Längsaufnahmeflächen 12 zur Anlage gebracht werden.

Gleichzeitig zur Ausrichtung des Zylinderkopfes in Längsrichtung 7 erfolgt eine Ausrichtung in Querrichtung 9. Dabei werden Queraufnahmeinstrumente an den Queraufnahmeflächen 22 am Einlaßflansch 3 angelegt. Bei den gleichzeitigen Zustellbewegungen der zusammenwirkenden Aufnahmeinstrumente zur Ausrichtung in Längsrichtung 7 und in Querrichtung 9 wird der Zylinderkopfrohling kontrolliert in die vorgesehene Ausrichtungslage geschoben. Der ausgerichtete Zylinderkopfrohling wird von der Spannvorrichtung fixiert und eine Bearbeitungsmaschine schließt die Erstaufnahme mit dem Anbringen von Bezugsbohrungen 23 ab, welche der Orientierung weiterer Bearbeitungsgänge zur Fertigstellung des Zylinderkopfes 2 dienen. Die Einspannung des Gußrohlings bei der Erstaufnahme erfolgt dabei von dem den Queraufnahmeflächen 22 gegenüberliegenden Auslaßflansch 4 aus.

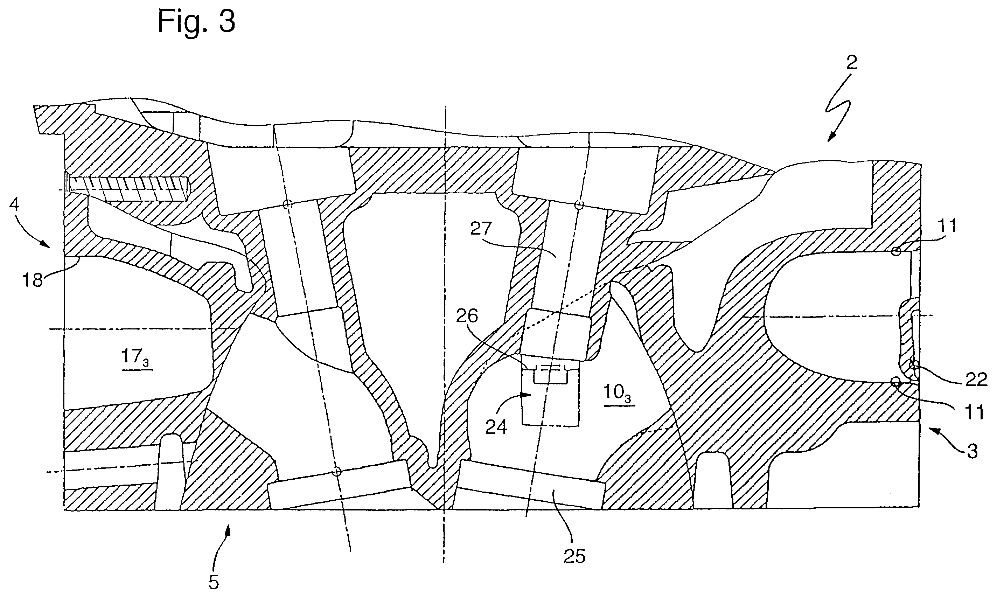

Fig. 3 zeigt einen Querschnitt durch den Zylinderkopf 2 auf Höhe des dem dritten Zylinder zugeordneten und mit Aufnahmeflächen versehenen Einlaßkanal 10₃ in Fig. 1. Ersichtlich sind die Vertikalaufnahmeflächen 11 im Endbereich des Einlaßkanals 10₃ benachbart des Einlaßflansches 3 und die Vertikalaufnahmefläche 18 im Endbereich des Auslaßkanals 17₃ benachbart des Auslaßflansches 4. Die jeweiligen Aufnahmeinstrumente zur Ausrichtung des Zylinderkopfes 2 werden bei der Erstaufnahme des Zylinderkopfes im Inneren der Kanäle zur Anlage gebracht, so daß Oberflächenungenauigkeiten der Rohlingskontur keinen Einfluß auf die Präzision der Erstaufnahme haben. Im jeweiligen Endabschnitt benachbart der Brennraumseite ist in jedem Einlaßkanal 10 und in jedem Auslaßkanal 17 im Zylinderkopf 2 ein Ventilsitz 25 ausgeformt, welcher in der Brennkraftmaschine mit einem Ventilglied zur Beherrschung des jeweiligen Kanals zusammenwirkt. Diese Ventilglieder sind durch einen Ventilstößel betätigbar, welcher durch einen Stößeldurchbruch 27 in den jeweiligen Kanal mit dem Ventilglied im Ventilsitz 25 verbunden ist. Der Stößeldurchbruch 27 wird bei der Urformgebung des Zylinderkopfes 2 mitgegossen, wobei an seiner Öffnung zum Eingangskanal 10₃ eine Kontrollfläche 26 ausgebildet wird, welche eine Überprüfung der vertikalen Ausrichtung des Zylinderkopfes 2 bei der Erstaufnahme gestattet. Die Kontrollfläche 26 liegt dadurch leicht zugänglich und strömungsgünstig im späteren Betrieb des Eingangskanals 10₃. Die Überprüfung der Vertikallage des Zylinderkopfes 2 erfolgt durch einen Meßdorn 24, welcher von der Brennraumseite 5 her durch den Ventilsitz 25 in den Einlaßkanal 10₃ eingeführt und an der Kontrollfläche 26 zur Anlage gebracht wird.

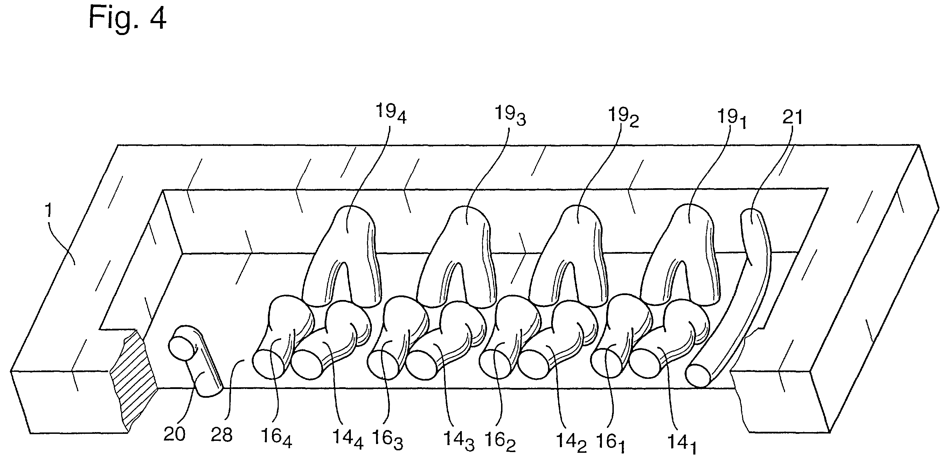

Der Vorgang der Erstaufnahme des Zylinderkopfrohlings ist an den im Zylinderkopf ausgebildeten Einlaß- und Auslaßkanälen bzw. den darin ausgebildeten Aufnahmeflächen orientiert, so daß die Präzision der Erstaufnahme in hohem Maße durch die relative Lage der einzelnen Kanäle im Zylinderkopf beeinflußt ist. Um die zur Erstaufnahme des Gußrohlings benötigten Konturen und Aufnahmeflächen in den Ein- und Auslaßkanälen beim Gießen des Zylinderkopfes genau und lagepräzise darzustellen, wird die in Fig. 4 dargestellte Vorrichtung zur Urformgebung vorgeschlagen. Die Gießkerne für Einlaß- und Auslaßkanäle sind an einem gemeinsamen, umlaufenden Rahmenkern 1 ausgebildet und sind auf diese Weise als Einheit in ein Gießwerkzeug zum Abgießen des Zylinderkopfes einlegbar. Die Vereinheitlichung durch den Rahmenkern 1 schränkt jegliche Relativbewegung einzelner Gießkerne zueinander ein und verhindert zuverlässig ein Abkippen einzelner Kanalgießkerne beim Abgießen des Zylinderkopfes. Der Rahmenkern gewährleistet überdies gratfreie Anlageflächen. Neben der Verkürzung der Rüstzeit des Gießwerkzeuges durch die Reduzierung vieler Einzelkerne auf ein Kernpaket mit Rahmenkern 1 ist auf diese Weise die größtmögliche Exaktheit der Lage der Einlaßkanäle zur Brennraumseite des Zylinderkopfes erreicht. An einem Schenkel des Rahmenkerns 1 sind pro Zylinder ein Kanalgießkern 19₁₋₄ zur Darstellung zweier zusammenlaufender Auslaßkanäle ausgebildet. Am gegenüberliegenden Schenkel 28 des Rahmenkerns 1 sind pro Zylinder ein Gießkern 14₁₋₄ zur Darstellung von Einlaßkanälen, welche zur Durchführung des Verfahrens zur Erstaufnahme mit ebenen Aufnahmeflächen versehen sind und ein Gießkern 16₁₋₄ zur Darstellung eines zweiten Einlaßkanals ausgebildet. Die Gießkerne 14₁₋₄, welche zur Formgebung der zur Erstaufnahme des Zylinderkopfrohlings vorgesehenen Einlaßkanäle dienen, weisen in ihrem Endabschnitt benachbart des Schenkels 28 des Rahmenkernes 1 einen rechteckigen Querschnitt zur Darstellung der Aufnahmeflächen zur Ausrichtung des Zylinderkopfes auf. An den Innenseiten der die Gießkerne tragenden Schenkel des Rahmenkerns 1 ist die Kontur des Einlaß- bzw. Auslaßflansches des Zylinderkopfes dargestellt. An der Innenseite des die Gießkerne 14, 16 zur Ausbildung der Einlaßkanäle tragenden Schenkels 28 des Rahmenkernes 1 sind die Konturen zum Abgießen der Queraufnahmeflächen am Einlaßflansch (Fig. 1) dargestellt.

Neben den Gießkernen 14, 16, 19 zur Darstellung der Einlaß- und Auslaßkanäle der einzelnen Zylinder der Brennkraftmaschine trägt der Rahmenkern 1 weitere Gießkerne 20, 21 zur Erzeugung weiterer Kanäle im Zylinderkopf. Ein Gießkern 20 ist benachbart der Gießkerne für die Einlaßkanäle an dem Schenkel 28 des Rahmenkernes 1 ausgebildet und ermöglicht bei der Urformgebung des Zylinderkopfes die Ausgestaltung eines Kühlmittelkurzschlußkanals. Darüber hinaus ist zwischen den Schenkeln des Rahmenkernes 1 ein durchgehender Gießkern 21 angeordnet, welcher beim Abgießen des Zylinderkopfes einen vom Auslaßflansch zum Einlaßflansch des Zylinderkopfes durchgehenden Kanal zur Rückführung von Abgasen ausbildet.

## Patentansprüche

1. Zylinderkopf (2) für Brennkraftmaschinen, welcher reihenartig von pro Zylinder jeweils mindestens einem Einlaßkanal (10₁₋₄) ausgehend von einem Einlaßflansch (3) und jeweils mindestens einem Auslaßkanal (17₁₋₄) ausgehend von einem dem Einlaßflansch (3) gegenüberliegend ausgebildeten Auslaßflansch (4) bis zu einer auf die Zylinder auflegbaren Brennraumseite (5) durchsetzt ist,
dadurch gekennzeichnet, daß in einem Endabschnitt benachbart des Einlaßflansches (3) mindestens zweier Einlaßkanäle (10₁₋₄) unterschiedlicher Zylinder gegenüberliegende Vertikalaufnahmeflächen (11) parallel zur Brennraumseite (5) ausgebildet sind, in den Endabschnitten benachbart des Einlaßflansches (3) von Einlaßkanälen (10₁₋₄) mindestens zweier Zylinder parallele Längsaufnahmeflächen (12) senkrecht zur Brennraumseite (5) ausgebildet sind, welche in Längsrichtung des Zylinderkopfes jeweils entgegengesetzt angeordnet sind, und daß in einem Endabschnitt benachbart des Auslaßflansches (4) mindestens eines Auslaßkanals (17₁₋₄) mindestens eine Vertikalaufnahmefläche (18) parallel zur Brennraumseite (5) sowie an einem Flansch (3, 4) mindestens zwei in Längsrichtung (7) des Zylinderkopfes (2) beabstandete Queraufnahmeflächen (22) ausgebildet sind.

2. Zylinderkopf nach Anspruch 1,
dadurch gekennzeichnet, daß in den jeweiligen Endabschnitten benachbart des Einlaßflansches (3) mindestens zweier Einlaßkanäle (10₁₋₄) Vertikalaufnahmeflächen (11) und in den Endabschnitten mindestens zweier weiterer Einlaßkanäle (10₁₋₄) Längsaufnahmeflächen (12) ausgebildet sind.

3. Zylinderkopf nach Anspruch 1 oder 2,
dadurch gekennzeichnet, daß die mit Aufnahmeflächen (11, 12) ausgebildeten Einlaßkanäle (10₁₋₄) im Endabschnitt benachbart des Einlaßflansches (3) einen rechteckigen Querschnitt aufweisen.

4. Zylinderkopf nach einem der Ansprüche 1 bis 3,
dadurch gekennzeichnet, daß pro Zylinder ein Einlaßkanal (10₁₋₄) im Endabschnitt benachbart des Einlaßflansches (3) mit jeweils gegenüberliegenden Vertikalaufnahmeflächen (11) und Längsaufnahmeflächen (12) ausgebildet ist und einen rechteckigen Querschnitt aufweist.

5. Zylinderkopf nach einem der Ansprüche 1 bis 4,
dadurch gekennzeichnet, daß die Auslaßkanäle (17₁₋₄) einen weitgehend kreisförmigen Querschnitt aufweisen, wobei eine Vertikalaufnahmefläche (18) im Endabschnitt eines Auslaßkanals (17₃) benachbart des Auslaßflansches (4) durch eine Sehne im Kreisquerschnitt gebildet ist.

6. Zylinderkopf nach einem der Ansprüche 1 bis 5,
dadurch gekennzeichnet, daß pro Zylinder jeweils zwei Einlaßkanäle (10, 15) und zwei Auslaßkanäle (17₁₋₄) ausgebildet sind.

7. Verfahren zur Erstaufnahme eines Gußrohlings eines Zylinderkopfes (2) für Brennkraftmaschinen, welcher reihenartig von pro Zylinder jeweils mindestens einem Einlaßkanal (10₁₋₄) ausgehend von einem Einlaßflansch (3) und jeweils mindestens einem Auslaßkanal (17₁₋₄) ausgehend von einem dem Einlaßflansch (3) gegenüberliegend ausgebildeten Auslaßflansch (4) bis zu einer auf die Zylinder auflegbaren Brennraumseite (5) durchsetzt ist,
dadurch gekennzeichnet, daß eine Aufnahmevorrichtung den Zylinderkopf (2) in einer Spannvorrichtung einer Bearbeitungsmaschine positioniert, indem pro Positionierrichtung (7, 8, 9) mindestens zwei zusammenwirkende Aufnahmeinstrumente jeweils in einen Einlaßkanal (10₁₋₄) und/oder einen Auslaßkanal (17₁₋₄) vom jeweiligen Flansch (3, 4) her eingeführt werden, durch Zustellbewegungen an jeweils im Endabschnitt der Kanäle (10, 17) ausgebildete Aufnahmeflächen (11, 12, 18) gelegt werden und den Zylinderkopf (2) in eine bestimmte Bearbeitungsposition bringen, wobei die Spannvorrichtung den Zylinderkopf bei Erreichen dieser Position fixiert und die Bearbeitungsmaschine Bezugsbohrungen (23), Bezugsflächen und dgl. zur Orientierung für weitere Bearbeitungsvorgänge des Zylinderkopfes (2) anbringt.

8. Verfahren nach Anspruch 6,
gekennzeichnet durch die folgenden Verfahrensschritte bei der Ausrichtung des Zylinderkopfes (2):
1) Der Zylinderkopf (2) wird in vertikaler Richtung (8) senkrecht zur Brennraumseite (5) ausgerichtet, wobei
a) in zwei Eingangskanäle (10₁, 10₄) Aufnahmeinstrumente eingeführt werden und jeweils an zwei gegenüberliegend und parallel zur Brennraumseite (5) des Zylinderkopfes (2) ausgebildeten Vertikalaufnahmeflächen (11) angelegt werden,
b) ein Ausrichtungsinstrument in einen Auslaßkanal (17) eingeführt und an eine im Endabschnitt des Auslaßkanals (17) ausgebildete Vertikalaufnahmefläche (18) parallel zur Brennraumseite (5) des Zylinderkopfes (2) gedrückt wird,
2) der Zylinderkopf (2) wird in Längsrichtung (7), d.h. in Richtung der Reihenanordnung der Kanäle ausgerichtet, indem in zwei Einlaßkanäle (10₂, 10₃) Aufnahmeinstrumente eingeführt und in Längsrichtung (7) entgegengesetzt zugestellt werden bis zu einer Anlage an Längsaufnahmeflächen (12), welche im Endabschnitt dieser Einlaßkanäle (10₂, 10₃) senkrecht zur Brennraumseite (5) ausgebildet sind,
3) der Zylinderkopf (2) wird in Querrichtung (9) senkrecht zum Einlaßflansch (3) bzw. zum Auslaßflansch (4) ausgerichtet, indem Aufnahmeinstrumente an Queraufnahmeflächen (22) angelegt werden, welche in Längsrichtung (7) des Zylinderkopfes (2) beabstandet auf dem Einlaßflansch (3) oder dem Auslaßflansch (4) ausgebildet sind, und mit einer Zustellbewegung in Querrichtung (9) den Zylinderkopf (2) in die vorgesehene Position schieben.

9. Verfahren nach Anspruch 8,
dadurch gekennzeichnet, daß die Ausrichtung des Zylinderkopfes (2) in Längsrichtung (7) und in Querrichtung (9) gleichzeitig erfolgt.

10. Verfahren nach Anspruch 8 oder 9,
dadurch gekennzeichnet, daß ein oder mehrere Meßdorne (24) von der Brennraumseite (5) in einen Einlaßkanal (10₁₋₄) geführt wird und die Anlage einer Kontrollfläche (26) im Inneren des Einlaßkanals (10₁₋₄) geprüft wird.

11. Verfahren nach einem der Ansprüche 8 bis 10,
dadurch gekennzeichnet, daß die Ausrichtung des Zylinderkopfes (2) in vertikaler Richtung (8) an Einlaßkanälen (10₁₋₄) erfolgt, welche in der Reihe der Einlaßkanäle (10₁₋₄) außen liegen.

12. Verfahren nach einem der Ansprüche 8 bis 11,
dadurch gekennzeichnet, daß die Ausrichtung des Zylinderkopfes (2) in vertikaler Richtung (8) an einem Auslaßkanal (17) erfolgt, welcher in der Reihe der Auslaßkanäle (17) mittig liegt.

13. Vorrichtung zur Urformgebung eines Zylinderkopfes (2) für eine Brennkraftmaschine mit mehreren Zylindern nach einem der Ansprüche 1 bis 4, wobei zur Erzeugung von durchströmbaren Kanälen (10, 15, 17) im Zylinderkopf (2) Gießkerne (14, 16, 19, 20, 21) vorgesehen sind, welche in ein Gießwerkzeug einlegbar sind,
dadurch gekennzeichnet, daß sämtliche Gießkerne (14, 16, 19, 20, 21) an einem gemeinsamen Rahmenkern (1) befestigbar sind und als Einheit in das Gießwerkzeug zum Abgießen eines Zylinderkopfes (2) einlegbar sind.
